# EUROPEAN PATENT APPLICATION

(11) **EP 4 636 524 A1**
(43) Date of publication of application: **22.10.2025**
(21) Application number: 25169618.3
(22) Date of filing: 10.04.2025
(51) Int. Cl.: G05D 1/222, G05D 1/87, G05D 109/20

(54) **REDUNDANT FLIGHT-CONTROL SYSTEM**

(30) Priority: 15.04.2024 IT 202400008434
(71) Applicant: FlyingBasket Srl, 39100 Bolzano (IT)
(72) Inventor: Moroder, Matthias, 39100 Bolzano (IT); Moroder, Moritz, 39100 Bolzano (IT)
(74) Representative: Ausserer, Anton

(57) **Abstract**

A control apparatus for controlling an aircraft in flight includes a propulsion unit operable to propel the aircraft, flight-control systems, and an arbitration circuit, all connected to a communication bus. Each flight control system can receive the same direction control signal and can send flight-control signals to and receive flight-control signals from the communication bus to the propulsion unit. The arbitration circuit can be connected to the communication bus and operable to send and receive arbitration signals to and from the communication bus. The control apparatus can comprise multiple, redundant propulsion units and can be operationally robust without a single point of failure.

## Description

### TECHNICAL FIELD

The present disclosure relates to redundant flight-control systems for aircraft with no single point of failure leading to an uncontrolled descent and crash, particularly for unmanned aerial systems.

### BACKGROUND

Unmanned aerial systems can include unmanned aerial vehicles (UAVs), for example drones with propulsion systems, operating systems, and flight-control surfaces, and ground-control stations with communication systems. In recent years, a wide variety of UAVs are commercially available for a wide variety of applications.

UAVs can be expensive and can pose a safety risk when failing or crashing. It is therefore desirable that they operate over a long period of time without failure, especially for applications that are mission-critical, require lengthy operating periods before maintenance, or in hazardous operating conditions. UAVs with a reduced failure rate are therefore desirable and valuable.

### SUMMARY

The present disclosure provides, inter alia, structures, materials, systems, and methods for flight-control systems in aircraft, particularly unmanned aircraft, that provide reduced failure rates and an increased mean-time-between failure (MTBF), thereby increasing reliability and reducing operating, maintenance, or replacement costs. According to embodiments of the present disclosure, a control apparatus for controlling an aircraft in flight comprises a propulsion unit operable to propel the aircraft, a communication bus connected to the propulsion unit operable to communicate propulsion control signals to the propulsion unit, flight-control systems, each flight control system operable to receive the same direction control signal and send flight-control signals to and receive flight-control signals from the communication bus, and an arbitration circuit connected to the communication bus operable to send and receive arbitration signals to and from the communication bus.

In embodiments, each of the flight-control systems comprises a stored-program computer operable to execute a program implementing an algorithm. The flight-control systems can comprise a first flight-control system and a second flight-control system different from the first flight-control system. The physical hardware of the first flight-control system can be different from the physical hardware of the second flight-control system. The physical hardware of the first flight-control system can be substantially the same as the physical hardware of the second flight-control system but the construction of the flight-control signals of the first flight-control system can be different from the construction of the flight-control signals of the second flight-control system. The flight-control systems can each comprise substantially identical computers but execute different software programs. In some embodiments, the flight-control systems comprise a first flight-control system and a second flight-control system substantially identical to the first flight-control system.

According to embodiments of the present invention, multiple propulsion units can be connected to the communication bus and each propulsion unit can be operable to propel the aircraft in combination with every other propulsion unit. The aircraft can be operable with fewer than all of the multiple propulsion units.

Embodiments of the present invention can comprise multiple communication buses. Each of the multiple communication buses can be uniquely connected to one-or-more separate propulsion units and operable to communicate flight-control signals to the one-or-more separate propulsion units from all of the flight-control systems. Each of the multiple communication buses can be connected to all of the flight-control systems to communicate flight-control signals. Each of the communication buses can be connected to the arbitration circuit to communicate arbitration signals. In embodiments, the aircraft is operable with fewer than all of the multiple propulsion units connected to each communication bus.

According to embodiments of the present disclosure, the control apparatus has no single point of failure.

In some embodiments of the present disclosure, a ground-control system can be operable to communicate the directional control signal to the flight-control systems through a communication link. The ground-control system can be operable to receive a manual-control signal from a pilot, the arbitration circuit can be operable to receive the manual-control signal, the ground-control system can be operable to communicate the manual-control signal to the arbitration circuit, and the arbitration circuit can be operable to select a flight-control system in response to the manual-control signal.

Some embodiments of the present disclosure comprise multiple, redundant power supplies to provide power (e.g., electrical power comprising current provided at a pre-determined voltage) to any one or more of the propulsion unit(s), the communication bus(es), the flight-control systems, and the arbitration circuit. The multiple, redundant power supplies can be electrically connected in parallel. In some embodiments, the multiple, redundant power supplies comprise a first power supply and a second power supply, the flight-control systems comprise a first flight-control system and a second flight-control system, and (i) the first power supply is connected to the first flight-control system and not to the second flight-control system, and (ii) the second power supply is connected to the second flight-control system and not to the first flight-control system.

In some embodiments, the aircraft is a fixed wing aircraft or a helicopter. In some embodiments, the aircraft is a multi-rotor aircraft.

In some embodiments, the arbitration circuit can be operable to instruct the propulsion units to receive operate in response to flight-control signals from one or the other flight-control system. Embodiments of the present disclosure provide flight-control systems with reduced failure rates. The flight-control systems can be used, for example, with piloted aircraft or unpiloted aircraft, such as unmanned aerial vehicles (drones) to improve reliability
and reduce maintenance, operating, and replacement costs.

### BRIEF DESCRIPTION OF THE DRAWINGS

The foregoing and other objects, aspects, features, and advantages of the present disclosure will become more apparent and better understood by referring to the following description taken in conjunction with the accompanying drawings, in which:
Fig. 1 is a diagram of an unmanned aerial system according to illustrative embodiments of the present disclosure;
Fig. 2 is a block diagram of an unmanned aerial system and control apparatus detail according to illustrative embodiments of the present disclosure;
Fig. 3 is a block diagram of an unmanned aerial system and control apparatus detail without a single-point-of-failure according to illustrative embodiments of the present disclosure;
Fig. 4 is a block diagram of multiple propulsion units each connected to multiple communication buses according to illustrative embodiments of the present disclosure; and
Fig. 5 is a flow diagram according to illustrative embodiments of the present disclosure.

Features and advantages of the present disclosure will become more apparent from the detailed description set forth below when taken in conjunction with the drawings, in which like reference characters identify corresponding elements throughout. In the drawings, like reference numbers generally indicate identical, functionally similar, and/or structurally similar elements. The figures are not necessarily drawn to scale. The vertical scale of the Figures can be exaggerated to clarify the illustrated structures.

### DETAILED DESCRIPTION OF CERTAIN EMBODIMENTS

According to embodiments of the present disclosure, among other things, a control apparatus enables the efficient control of an aircraft through communication and coordination between various redundant components, ensuring reliable performance. In some embodiments, the aircraft comprises a control apparatus without a single-point of failure, providing robust operation in difficult flight circumstances.

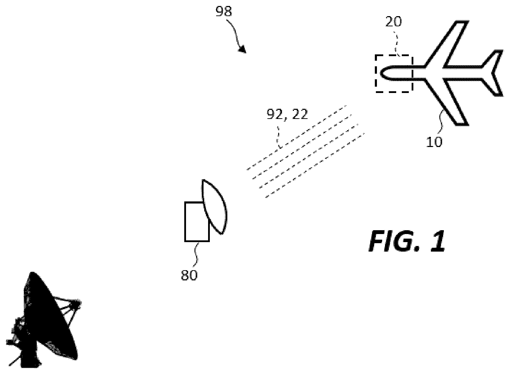

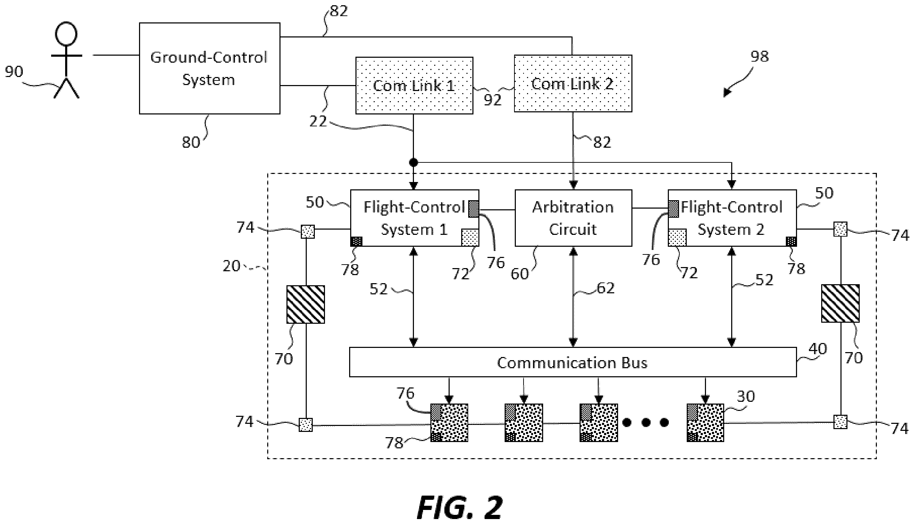

As shown in Fig. 1, an unmanned aerial system 98 comprises a ground-control system 80 operable to communicate with an aircraft 10 through a communication link 92, for example communicating direction-control signals 22 with radio signals comprising communication link 92 transmitted from ground-control system 80 to aircraft 10. In some embodiments, ground-control system 80 can control aircraft 10 with communicated direction-control signals 22. In some embodiments, direction-control signals 22 can be pre-programmed (e.g., prior to flight) into control apparatus 20 so that aircraft 10 can operate autonomously or semi-autonomously. As used herein and shown in the Figures, a communication channel (e.g., communication link 92) is not distinguished from the information communicated on the channel. For example, radio signals can communicate direction-control signals 22 transmitted through communication link 92. In other examples and as shown in Fig. 2, electrical signals can communicate information such as flight-control signals 52 transmitted on a wire.

In embodiments, aircraft 10 can comprise a control apparatus 20 that at least partially controls aircraft 10, either independently of ground-control system 80, for example autonomously in response to direction-control signals 22 stored in a memory 72, or in response to direction-control signals 22 transmitted from ground-control system 80 through communication link 92. In various embodiments, aircraft 10 can be a fixed-wing aircraft, a helicopter, or a multi-rotor aircraft (e.g., a drone such as a multi-rotor or multi-copter comprising more than two lift-generating rotors or propellers and capable of hovering and vertical take-off and landing) .

As shown in Fig. 2, a control apparatus 20 for controlling an aircraft 10 in flight comprises a propulsion unit 30 (or multiple propulsion units 30) operable to propel aircraft 10 in flight, multiple flight-control systems 50, an arbitration circuit 60, and one or more communication bus(es) 40 connected to propulsion unit 30, arbitration circuit 60, and flight-control systems 50. Communication bus(es) 40 can be operable to communicate flight-control signals 52 to propulsion unit 30 from flight-control systems 50. Each flight-control system 50 can be operable to receive the same direction-control signal 22 and send flight-control signals 52 to and receive flight-control signals 52 from communication bus 40. Communication bus 40 can be operable to communicate flight-control signals 52 to and from each of flight-control systems 50 and to and from propulsion unit 30. Communication bus 40 can be operable to communicate arbitration signals 62 to and from arbitration circuit 60 and to and from propulsion units 30 (and optionally flight-control systems 50). Arbitration circuit 60 can be operable to instruct propulsion unit 30 to receive control instructions from one or another flight-control system 50. In some embodiments, control apparatus 20 comprises multiple propulsion units 30, each propulsion unit 30 operable to receive flight-control signals 52 from flight-control systems 50 and arbitration signals 62 from arbitration circuit 60. Arbitration signals 62 can be operable to instruct propulsion unit 30 to operate in response to a selected one of flight-control systems 50.

In embodiments, ground-control system 80 can comprise electronic communication systems, for example a radio comprising one or more electronic circuits and antennas. A communication link 92 can be or comprise a modulated electromagnetic signal (e.g., a radio wave). Flight-control systems 50 can comprise electronic hardware (e.g., electronic circuits) or, in some embodiments, stored-program machines (e.g., computers or micro-processors) executing a program implementing an algorithm (e.g., software). Similarly, arbitration circuit 60 can comprise electronic hardware and, in some embodiments, stored-program machines (e.g., computers or micro-processors) executing a program implementing an algorithm (e.g., software). Communication bus 40 can be an electronic bus comprising one or more electronic wires connected in parallel to multiple elements, for example flight-control systems 50, arbitration circuit 60 and propulsion unit(s) 30. Propulsion units 30 can comprise electronic hardware (e.g., an electronic circuit) operable to control physical structures (e.g., propellers or rotors) intended to provide lift to aircraft 10, for example with an electric motor. The electronic hardware can comprise stored-program machines (e.g., computers or micro-processors) executing a program implementing an algorithm (e.g., software).

The signals (e.g., flight-control signals 52, arbitration signals 62, and direction-control signals 22 can be binary signals having a binary value corresponding to different electrical voltage levels, frequencies, optical pulses, or other communication signals known in the communication arts. Communication bus 40 can be operable to communicate signals to and from each element (e.g., flight-control systems 50, arbitration circuit 60 and propulsion unit 30) connected to it using bus protocols to communicate handshakes, priority control, data signals, element addresses, and the like as are known in the electronic system arts. Electronic hardware and stored-program machines can comprise integrated circuits electrically connected on a printed-circuit board. Likewise, communication bus 40 can be disposed on or a part of a printed-circuit board. Control apparatus 20 can comprise one or more printed circuit boards on which are mounted integrated circuits for implementing or controlling the functions of flight-control systems 50, arbitration circuit 60, and propulsion unit 30. Embodiments of the present disclosure are intended to reduce the likelihood of an aircraft 10 failure by providing redundant units, e.g., flight-control systems 50, and selecting operable units when a redundant unit fails. In some embodiments, the likelihood of simultaneous failure of redundant units is decreased by implementing the redundant units in different ways, for example using different hardware, different software, or different algorithms. Although the redundant units (e.g., flight-control systems 50) can receive identical input signals (e.g., from aircraft flight sensors or direction-control signals 22 form ground-control system 80) and, when operating correctly, produce substantially similar or identical flight-control signals 52 in response to the input signals, by using different hardware, software, or algorithms, each redundant unit can have different failure modes. Thus, a single failure mode that affects one of the redundant units is less likely to cause a failure of another of the redundant units, improving the reliability and robustness of control apparatus 20. Thus, in embodiments, control apparatus 20 can comprise first and second flight-control systems 50 wherein (i) the physical hardware of first flight-control system 50 is different from the physical hardware of second flight-control system 50 or (ii) the physical hardware of first flight-control system 50 is substantially the same as the physical hardware of second flight-control system 50 but the construction of flight-control signals 52 of first flight-control system 50 is different from the construction of flight-control signals 52 of second flight-control system 50. For example, flight-control systems 50 can each comprise substantially identical computers (e.g., hardware) but execute different algorithms (e.g., software programs) in response to common inputs. The different flight-control systems 50 can receive input signals (e.g., direction-control signals 22) having a common format and information content (e.g., identical signals connected in common) and output flight-control signals 52 having a common format and information content so that control apparatus 20 can switch between redundant components without affecting other elements in control apparatus 20.

In some embodiments control apparatus 20 can comprise multiple propulsion units 30, as shown in Fig. 2. The multiple propulsion units 30 can be connected to communication bus 40 and each propulsion unit 30 can be operable to propel aircraft 10 in combination with every other propulsion unit 30. Propulsion units 30 can be substantially identical or can be different, e.g., comprising different motors, engines, propellers (rotors), electronic control hardware, or execute different software to implement different algorithms in response to common inputs, for example provided over communication bus 40, and having different failure modes. In embodiments, aircraft 10 is operable with fewer than all of multiple propulsion units 30.

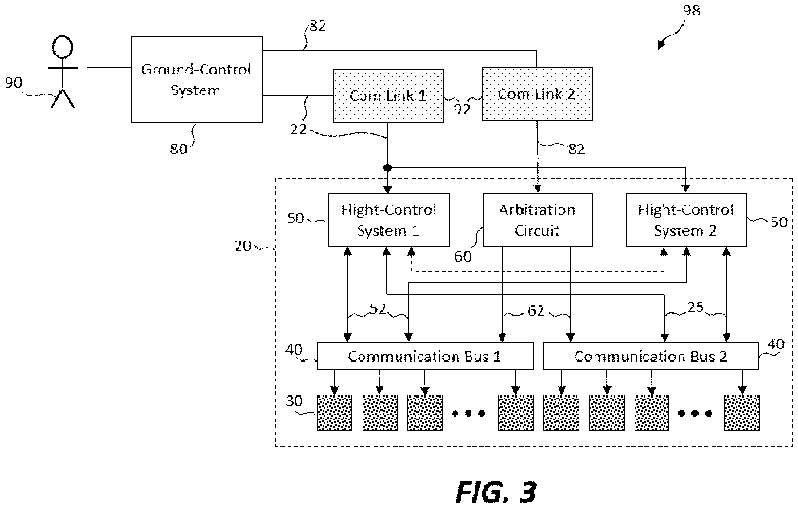

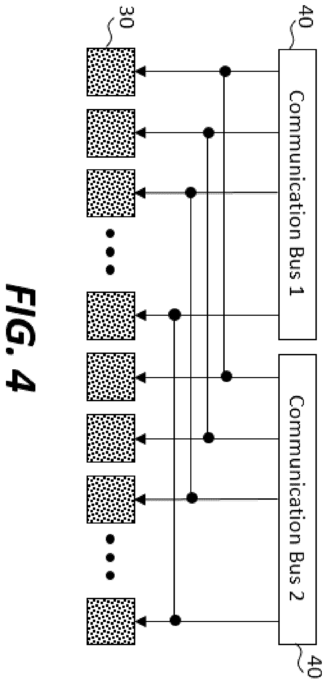

In some embodiments and as illustrated in Fig. 3, control apparatus 20 can comprise multiple communication buses 40. Each communication bus 40 can be connected to arbitration circuit 60 and to all of flight-control systems 50, for example first flight-control system 50 (e.g., flight-control system 1) and second flight-control system 50 (e.g., flight-control system 2). In embodiments, each communication bus 40 can be uniquely connected to one-or-more separate propulsion units 30 (e.g., each propulsion unit 30 is connected to only one communication bus 40) and is operable to communicate flight-control signals 52 to the one-or-more separate propulsion units 30 connected to each communication bus 40. In embodiments, each of communication buses 40 is connected to arbitration circuit 60 to communicate arbitration signals 62 from arbitration circuit 60 to propulsion units 30. The use of communication buses 40 is not an arbitrary choice. Multiple communication buses 40 prevent a single-point of failure in communicating to propulsion units 30. Moreover, by using a communication bus 40 (rather than point-to-point, serial, or daisy-chain connections for example) communication from different redundant units (e.g., flight-control systems 50) are enabled. For example, if a daisy-chain or serial connection for redundant units is used, any failure of a redundant unit can prevent other redundant units from operating. In another example, if direct connections are used to redundant first units (e.g., a propulsion unit 30), if a redundant second unit (e.g., a flight-control system 50 providing flight-control signals 52 to propulsion unit 30) fails, propulsion unit 30 is 'orphaned' or 'stranded', e.g., has no flight-control system 50 to provide flight-control signals 52 to it, and consequently the orphaned or stranded unit cannot operate even if it is functional. In contrast and according to embodiments of the present disclosure, if a flight-control system 50 fails, remaining redundant flight-control systems 50 can still communicate to every propulsion unit 30 (because they are connected in parallel to a common communication bus 40) and aircraft 10 and control apparatus 20 can continue to function as desired. If a communication bus 40 fails, the propulsion units 30 connected to remaining communication bus(es) 40 can still operate and, in some embodiments, the remaining propulsion units 30 are adequate to operate aircraft 10. In some embodiments and as illustrated in Fig. 4, one or more propulsion units 30 can connect to two or more communication buses 40, for example each of the propulsion units 30 is connected to all of the communication buses 40. In such embodiments, if a communication bus 40 fails, none of the propulsion units 30 are necessarily unavailable and all of the propulsion units 30 can continue to operate by communicating through another communication bus 40. The connection between communication buses 40 and each propulsion unit 30 can itself be a bus or can comprise multiple separate connections that are selected by propulsion units 30, for example in response to arbitration signals 62 from arbitration circuit 60. Control signals for propulsion units 30 can be standard interfaces (e.g., CAN inputs for motor controllers in propulsion units 30).

Arbitration circuit 60 can function to monitor the operation of elements of control apparatus 20, for example flight-control systems 50, communication buses 40, and propulsion units 30, for example by monitoring communication signals (e.g., flight-control signals 52), testing the elements of control apparatus 20, and, optionally, receiving input from sensors 74 that measure attributes of control apparatus 20 (as shown in Fig. 2). For example, sensors 74 can monitor the voltage and current used by any element of control apparatus 20, for example propulsion units 30 and flight-control systems 50. Arbitration circuit 60 can comprise test circuits 76 that monitor the behavior of electronic circuits or hardware in flight-control systems 50, propulsion units 30, and communication buses 40 (or the test circuits 76 can be part of the tested elements of control apparatus 20 and monitored by arbitration circuit 60). For example, if a test circuit 76 input or wire should nominally provide a particular positive voltage but instead provides a voltage different from the particular positive voltage (e.g., a reduced, zero, or negative voltage), arbitration circuit 60 can determine a failure on the part of the element exhibiting the undesirable voltage and therefore compensate for the failure by controlling other elements of control apparatus 20 in accordance with the failure (e.g., by instructing other elements to ignore the failed element and to operate to compensate for the absence of the element). In embodiments, elements (e.g., propulsion units 30 or flight-control systems 50 can have fail-safe or shutdown circuits 78 that can be controlled by arbitration circuit 60, thereby enabling arbitration circuit 60 to isolate or compensate for failures of the element. (In Fig. 2, for clarity only some of the connections between arbitration circuit 60 and shutdown circuits 78, test circuits 76, and sensors 74 are shown.)

In embodiments of the present disclosure and as illustrated in Fig. 3, control apparatus 20 of aircraft 10 can have no single point of failure. Multiple redundant elements (e.g., flight-control systems 50 and propulsion units 30) of control apparatus 20 and multiple redundant communication channels (e.g., communication bus 40) enable operation even when a particular element or channel fails. Although only one arbitration circuit 60 is present and could fail, other elements (e.g., flight-control systems 50 and propulsion units 30) of control apparatus 20 can operate in a default mode in the absence of explicit operating instructions from arbitration circuit 60. Thus, aircraft 10 can operate even when any one element of control apparatus 20 fails.

Ground-control system 80 can interact with aircraft 10 through communication link 92 by sending or receiving information from aircraft 10. In some embodiments, ground-control system 80 can provide manual direction-control signals 22 (e.g., a manual-control signal 82) from a pilot 90 (e.g., a human operator) to aircraft 10 through communication link 92. The manual-control signal 82 can be provided to arbitration circuit 60 and arbitration circuit 60 can override other automated direction-control signals 22 (e.g., provided by flight-control systems 50). In some embodiments, direction-control signal 22 can include manual-control signals 82 provided by ground-control system 80. Arbitration circuit 60 can be operable to select a flight-control system 50 in response to manual-control signal 82, for example if a flight-control system 50 can be observed to fail and an operable flight-control system 50 is selected in place of the failed flight-control system 50.

Control apparatus 20 can also comprise other redundant elements. For example, in some embodiments, separate power supplies 70 (as shown in Fig. 2) can be provided to all or some of the elements of control apparatus 20. Power supplies 70 can be connected in parallel (not shown) or to different elements of control apparatus 20, as shown. For example, and as shown in Fig. 2, multiple, redundant power supplies 70 can comprise a first power supply 70 and a second power supply 70 and the flight-control systems 50 can comprise a first flight-control system 50 and a second flight-control system 50. The first power supply 70 can be connected to first flight-control system 50 and not to second flight-control system 50 and second power supply 70 can be connected to second flight-control system 50 and not to first flight-control system 50.

In some embodiments, control apparatus 20 can comprise multiple antennas and multiple wires to compensate for failures (e.g., from environmental damage) .

Flight-control systems 50 can be operable to receive input signals (e.g., direction-control signals 22 from ground-control system 80) and produce flight-control signals 52 for one or more propulsion units 30 so that propulsion units 30 can, together, function as desired. Flight-control signals 52 can be provided to one or more propulsion units 30 through communication bus(es) 40.

Arbitration circuit 60 can be operable to monitor the operation of flight-control systems 50, propulsion units 30, and communication bus(es) 40. If a fault is detected in any one of flight-control systems 50, propulsion units 30, and communication bus(es) 40 (e.g., any one of which can be an element of control apparatus 20), arbitration circuit 60 can communicate with the faulty element and can, in some embodiments, shut down the faulty element by communicating to the faulty element with arbitration signals 62. In some embodiments, other elements that are not faulty are instructed by arbitration circuit 60 with arbitration signals 62 not to operate in accordance with any signals from the faulty element. In some embodiments, other elements that are not faulty are instructed by arbitration circuit 60 with arbitration signals 62 to operate in accordance with a designated non-faulty element. For example, arbitration circuit 60 can be operable to instruct propulsion units 30 to receive and operate in response to flight-control signals 52 from one or the other flight-control system 50.

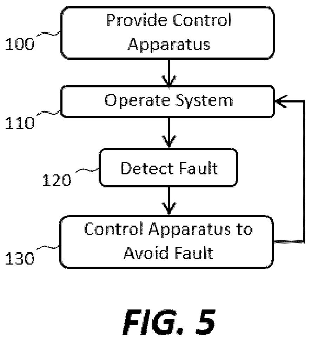

As illustrated in Fig. 5, an aircraft 10 comprising control apparatus 20 can be provided in step 100 and operated in step 110 with flight-control signals 52. Arbitration circuit 60 can detect a fault in control apparatus 20 in step 120 and instruct elements of control apparatus 20 with arbitration signals 62 to operate in response to the fault in step 130. The process then can repeat. Control apparatus 20 can instruct elements of control apparatus 20 by shutting down elements, instructing elements to ignore flight-control signals 52, or by instructing elements to respond only to flight-control signals 52 that emanate from a selected element. Elements of control apparatus 20 can comprise circuits that shut down the element, for example power circuits that can be turned off.

### PARTS LIST

- 10: aircraft
- 20: control apparatus
- 22: direction-control signal
- 30: propulsion unit
- 40: communication bus
- 50: flight-control system
- 52: flight-control signals
- 60: arbitration circuit
- 62: arbitration signals
- 70: power supply
- 72: memory
- 74: sensor
- 76: monitor circuit / test circuit
- 78: shutdown circuit
- 80: ground-control system
- 82: manual-control signal
- 90: pilot
- 92: communication link
- 98: unmanned aerial system
- 100: provide control apparatus step
- 110: operate system step
- 120: detect fault step
- 130: control apparatus to avoid fault step

## Claims

1. A control apparatus (20) for controlling an aircraft (10) in flight, the aircraft (10) comprising:
a propulsion unit (30) operable to propel the aircraft (109;
a communication bus (40) connected to the propulsion unit (30) operable to communicate propulsion control signals to the propulsion unit (30);
flight-control systems (50), the flight-control systems (50) comprise a first flight-control system and a second flight-control system different from the first flight-control system and redundant to the first flight-control system, each flight control system (50) operable to receive the same direction control signal and send flight-control signals (52) to and receive flight-control signals (52) from the communication bus (40); and
an arbitration circuit (60) connected to the communication bus (40) operable to send and receive arbitration signals (62) to and from the communication bus (40).

2. The control apparatus of claim 1, wherein each of the flight-control systems (50) comprises a stored-program computer operable to execute a program implementing an algorithm.

3. The control apparatus of claim 1, wherein (i) the physical hardware of the first flight-control system is different from the physical hardware of the second flight-control system or (ii) the physical hardware of the first flight-control system is substantially the same as the physical hardware of the second flight-control system but the construction of the flight-control signals (52) of the first flight-control system is different from the construction of the flight-control signals (52) of the second flight-control system.

4. The control apparatus of claim 1, wherein the flight-control systems (50) each comprise substantially identical computers but execute different software programs.

5. The control apparatus of claim 1, wherein the flight-control systems (50) comprise a first flight-control system and a second flight-control system substantially identical to the first flight-control system.

6. The control apparatus of claim 1, comprising multiple propulsion units (30) connected to the communication bus (40), each propulsion unit (30) operable to propel the aircraft (10) in combination with every other propulsion unit (30).

7. The control apparatus of claim 6, wherein the aircraft (10) is operable with fewer than all of the multiple propulsion units (30).

8. The control apparatus of claim 1, comprising multiple communication buses (40), (i) each of the multiple communication buses (40) uniquely connected to one-or-more separate propulsion units (30) and operable to communicate flight-control signals (52) to the one-or-more separate propulsion units (30) from all of the flight-control systems (50), (ii) each of the multiple communication buses (40) connected to all of the flight-control systems (50) to communicate flight-control signals (52), and (iii) each of the communication buses (40) connected to the arbitration circuit (60) to communicate arbitration signals (62).

9. The control apparatus of claim 8, wherein the aircraft (109 is operable with fewer than all of the multiple propulsion units (30) connected to each communication bus (40).

10. The control apparatus (20) of claim 8, wherein the control apparatus (20) has no single point of failure.

11. The control apparatus (20) of claim 1, comprising a ground-control system (80) operable to communicate the directional control signal to the flight-control systems (50) through a communication link.

12. The control apparatus (20) of claim 11, wherein the ground-control system (80) is operable to receive a manual-control signal (82) from a pilot (90), the arbitration circuit (60) is operable to receive the manual-control signal (82), the ground-control system (80) is operable to communicate the manual-control signal (82) to the arbitration circuit (60), and the arbitration circuit (62) is operable to select a flight-control system in response to the manual-control signal (82).

13. The control apparatus (20) of claim 1, comprising multiple, redundant power supplies (70).

14. The control apparatus (20) of claim 13, wherein the multiple, redundant power supplies (70) are electrically connected in parallel.

15. The control apparatus (20) of claim 13, wherein the multiple, redundant power supplies (70) comprise a first power supply and a second power supply, the flight-control systems (50) comprise a first flight-control system and a second flight-control system, and (i) the first power supply is connected to the first flight-control system and not to the second flight-control system, and (ii) the second power supply is connected to the second flight-control system and not to the first flight-control system.

16. The control apparatus (20) of claim 1, wherein the aircraft (10) is a fixed wing aircraft.

17. The control apparatus (20) of claim 1, wherein the aircraft (10) is a multi-rotor aircraft.

18. The control apparatus (20) of claim 1, wherein the arbitration circuit (60) is operable to instruct the propulsion units (30) to receive operate in response to flight-control signals (52) from one or the other flight-control system.
